# FASCICULE DE BREVET EUROPEEN

(11) **EP 4 226 078 B1**
(45) Date de publication et mention de la délivrance du brevet: **08.04.2026**
(21) Numéro de dépôt: 21793983.4
(22) Date de dépôt: 22.09.2021
(51) Int. Cl.: F21S 45/20, B60Q 1/04, F21S 45/47, F21S 41/148, F21S 41/162, F21S 41/50, F21S 41/20, B60R 19/50

(54) **PROJECTEUR A DOUBLE FENETRE ET VEHICULE COMPORTANT UN TEL PROJECTEUR**
DOPPELFENSTERSCHEINWERFER UND FAHRZEUG MIT EINEM SOLCHEN SCHEINWERFER
DOUBLE WINDOW HEADLAMP AND VEHICLE COMPRISING SUCH A HEADLAMP

(30) Priorité: 09.10.2020 FR 2010364
(43) Date de publication de la demande: 16.08.2023
(73) Titulaire: Stellantis Auto SAS, 78300 Poissy (FR)
(72) Inventeur: SIMANDRE, Stephane, 56660 ST JEAN BREVELAY (FR); GONCALVES, Filipe, 78540 VERNOUILLET (FR)
(74) Mandataire: BCIP
(86) Numéro de dépôt international: PCT/FR2021/051627
(87) Numéro de publication internationale: WO 2022/074310

(56) Documents cités:
- EP-A1- 2 154 029
- EP-A1- 2 650 098
- WO-A1-2016/177948
- WO-A1-2020/049590
- FR-A1- 3 010 956
- FR-A1- 3 016 684
- JP-A- 2003 068 126
- JP-A- 2004 014 423
- JP-A- 2012 069 372
- JP-A- 2012 142 160
- JP-A- 2014 166 782

## Description

L'invention concerne un projecteur de véhicule et un véhicule comportant un tel projecteur.

Afin d'éclairer la route et d'être visible des autres véhicules la nuit, les véhicules comportent des projecteurs à l'avant et à l'arrière. A l'avant du véhicule, le projecteur comporte une fonction de feu de route, qui éclaire la route sur une longue distance, une fonction code qui éclaire la route sur une plus courte distance que la fonction route afin de ne pas éblouir les autres usagers, une fonction de feu de position indiquant les limites du véhicule, une fonction clignotant qui permet d'indiquer la direction dans laquelle le véhicule souhaite tourner, par exemple à l'arriver sur un carrefour, et une fonction feu de jour qui améliore la visibilité du véhicule le jour. Afin de donner une esthétique particulière au véhicule, certains véhicules comportent deux projecteurs sur un même côté du véhicule, séparés l'un de l'autre par un élément de carrosserie, chacun des projecteurs portant des fonctions différentes. Par exemple, le véhicule de la marque déposée Citroën ^{®} avec le nom commercial déposé C5 Aircross ^{®} comporte un premier projecteur portant les fonctions de feux de route et code, et un deuxième projecteur située au-dessus du premier et portant les fonctions de clignotant, feu de jour et feu de position.

Afin de facilité l'installation d'un tel feu sur un véhicule et réduire le temps de montage, le document EP0971167 décrit un projecteur de véhicule comportant une seule vitre formant deux fenêtres séparées par un enfoncement, la lumière sortant de l'une des fenêtres ayant une première fonction et la lumière sortant par l'autre fenêtre une deuxième fonction différente de la première. Une fois installé sur le véhicule, un élément de carrosserie peut recouvrir cet enfoncement pour donner l'illusion de la présence de deux projecteurs séparés.

Les documents JP2003068126A1 et JP2012069372A décrivent également des projecteurs avec une seule vitre formant deux fenêtres séparées.

L'inconvénient d'une telle solution est que la taille du projecteur doit être importante pour permettre le déplacement des éléments optiques à l'intérieur du projecteur, notamment pour permettre le réglage de l'éclairage de la route, et la distance entre l'ampoule du projecteur et du réflecteur avec la vitre doit être suffisamment importante pour éviter de chauffer la vitre qui, généralement, est en plastique, notamment au niveau du renfoncement séparant les fenêtres. Ces éléments optiques sont par exemple un réflecteur avec son ampoule, ou bien un module comportant des diodes électroluminescentes fixées sur un support avec des réflecteurs.

L'objectif de l'invention est de remédier à ces inconvénients. En particulier, un des buts de l'invention est de proposer un projecteur comportant deux fenêtres, de taille réduire, limitant l'échauffement de la vitre. Un autre objectif est de proposer un tel projecteur permettant le réglage sur de grande amplitude des éléments optiques disposés à l'intérieur.

Ce but est atteint selon l'invention, grâce à un projecteur d'automobile tel que défini par la revendication 1.

Ainsi avantageusement, la partie bombée permet une circulation plus importante de l'air provenant de l'un des modules d'éclairage. En particulier, l'air chauffé située dans le réflecteur s'évacue plus facilement en passant par cette zone bombée, en disposant le renfoncement de sorte à être au-dessus dudit module d'éclairage une fois le projecteur installé sur le véhicule. Le module peut ainsi être rapprocher de la fenêtre qui lui est en vis-à-vis. De plus, cette disposition permet de dégager un volume au niveau de la zone bombée à l'intérieur du boîtier pour permettre le déplacement du module d'éclairage sur des grandes amplitudes, par exemple lors du réglage automatique de site de l'éclairage du projecteur. Cette conception permet de conserver un style donnant l'impression de la présence de deux projecteurs séparés en plaçant un élément de carrosserie entre les deux fenêtres, recouvrant le renfoncement et la zone bombée. Ainsi, la zone bombée reste invisible depuis l'extérieur du véhicule.

Dans un mode de réalisation préféré de l'invention, la zone bombée s'étend sur la première paroi latérale. De préférence, une partie du premier module d'éclairage est disposé en vis-à-vis de la zone bombée.

Ainsi avantageusement, l'espace entre le premier module d'éclairage et la vitre au niveau du premier bord latéral relié au bord de la première fenêtre, est important. L'amplitude de déplacement du premier module peut ainsi être important, et la capacité à évacuer l'air chaud chauffé par le premier module en dehors d'un réflecteur augmenté. Le module d'éclairage peut ainsi être proche de la première fenêtre, et la profondeur du projecteur, c'est-à-dire sa dimension suivant une direction sensiblement perpendiculaire à la vitre réduite, tout en évitant une surchauffe de la vitre et une réduction de l'amplitude de déplacement du module d'éclairage.

Dans un autre mode de réalisation qui n'est pas selon l'invention, le premier module comporte un réflecteur concave à l'intérieur duquel est disposé la source de lumière, ladite source de lumière étant une ampoule à incandescence, de préférence une ampoule halogène, le réflecteur comportant une ouverture délimitée par un bord extérieur et par laquelle la lumière produite par l'ampoule et réfléchie par le réflecteur est diffusée, le réflecteur et l'ampoule étant configurés de sorte à diriger la lumière de la source de lumière vers la première fenêtre. De préférence, une partie du bord extérieur du réflecteur est en vis-à-vis de la zone bombée.

Ainsi avantageusement, la chaleur produite par l'ampoule à incandescence s'évacue facilement du volume du réflecteur grâce à l'espace créé par la zone bombée entre la vitre et le bord extérieur du réflecteur.

Selon l'invention, le premier module comporte une diode électroluminescente formant la source de lumière, montée sur un support, et un réflecteur, la diode électroluminescente et le réflecteur étant configurés de sorte à réfléchir la lumière de la source de lumière vers la première fenêtre. De préférence, le renfoncement s'étend suivant une direction d'extension, le support est une plaque plane disposée sensiblement perpendiculairement à la première fenêtre et alignée avec la direction d'extension du renfoncement, en vis-à-vis de la zone bombée.

Selon l'invention, le premier module comporte une plaque complémentaire perpendiculaire au support, s'étendant depuis le bord dudit support disposé du côté de la vitre, la plaque complémentaire s'étendant à l'opposé du réflecteur en vis-à-vis de la zone bombée.

Dans un mode de réalisation, la paroi complémentaire est par exemple un élément cachant les composants électroniques disposés sur le support, du côté du support opposé au réflecteur. La plaque complémentaire peut aussi être une extension du support afin d'augmenter la capacité dudit support à évacuer la chaleur produite par la diode électroluminescente. La présence de la zone bombée permet le déplacement du premier module sur une amplitude importante sans avoir de contact entre le support et la vitre, notamment dans le renfoncement.

L'invention porte également sur un véhicule comportant un projecteur suivant l'une des revendications précédentes disposé à l'avant ou à l'arrière dudit véhicule.

Dans un mode de réalisation de l'invention portant sur le véhicule, ledit véhicule comporte un parechoc, et la première fenêtre est disposée en dessous de la deuxième fenêtre en se plaçant dans le référentiel du véhicule, la première fenêtre étant en vis-à-vis d'une ouverture du parechoc de forme complémentaire à celle de la fenêtre de sorte à permettre à la lumière produite par le premier module d'éclairage d'être diffusée devant le véhicule, le parechoc (101) comportant une partie de recouvrement s'étendant par-dessus le renfoncement, entre les deux fenêtres.

L'invention sera mieux comprise à la lecture de la description qui va suivre, donnée uniquement à titre d'exemple et faite en se référant aux dessins annexés, sur lesquels :
[Fig.1] représente l'avant d'un véhicule comportant un projecteur suivant l'invention, de chaque côté de l'avant.
[Fig.2] représente une vue de face du projecteur de la figure 1.
[Fig.3] représente une vue de profil du projecteur de la figure 1.
[Fig.4] représente une vue en coupe AA d'une première variante du projecteur qui n'est pas selon l'invention.
[Fig.5] représente une vue en coupe AA d'une deuxième variante du projecteur qui est selon l'invention.

Les dessins sont des représentations schématiques pour faciliter la compréhension de l'invention. Les composants ne sont pas forcément représentés à l'échelle. Les mêmes références correspondent aux mêmes composants d'une figure à l'autre.

L'axe X représente l'axe longitudinal du véhicule, l'axe Y l'axe transversal et l'axe Z l'axe vertical. Le dessus et le dessous sont pris dans le référentiel du véhicule. On entend par projecteur un bloc optique d'éclairage avant ou arrière. Le mode de réalisation illustré dans les figures représente un projecteur avant de véhicule.

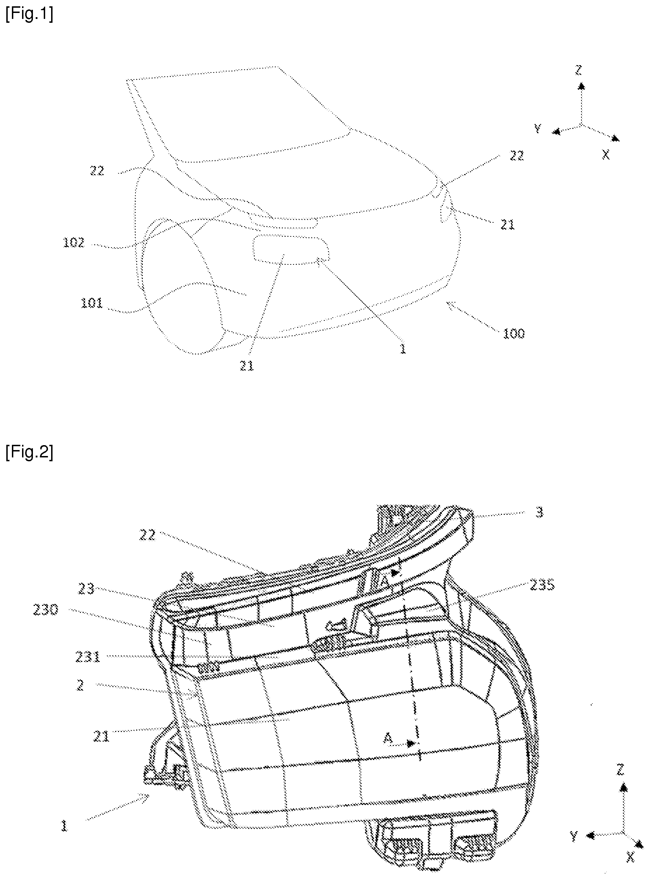

La figure 1 illustre l'avant d'un véhicule automobile 100 comportant un pare-chocs avant 101. Le véhicule comporte de chaque côté de la face avant un projecteur 1 suivant l'invention. Chaque projecteur 1 comporte une vitre 2 transparente formant deux fenêtres 21 et 22. La première fenêtre est disposée en dessous de la deuxième fenêtre 22, et un élément 102 du pare-chocs s'étend entre les deux fenêtres 21 et 22. Le pare-chocs 101 comportent des ouvertures disposées en vis-à-vis des fenêtres 21 et 22.

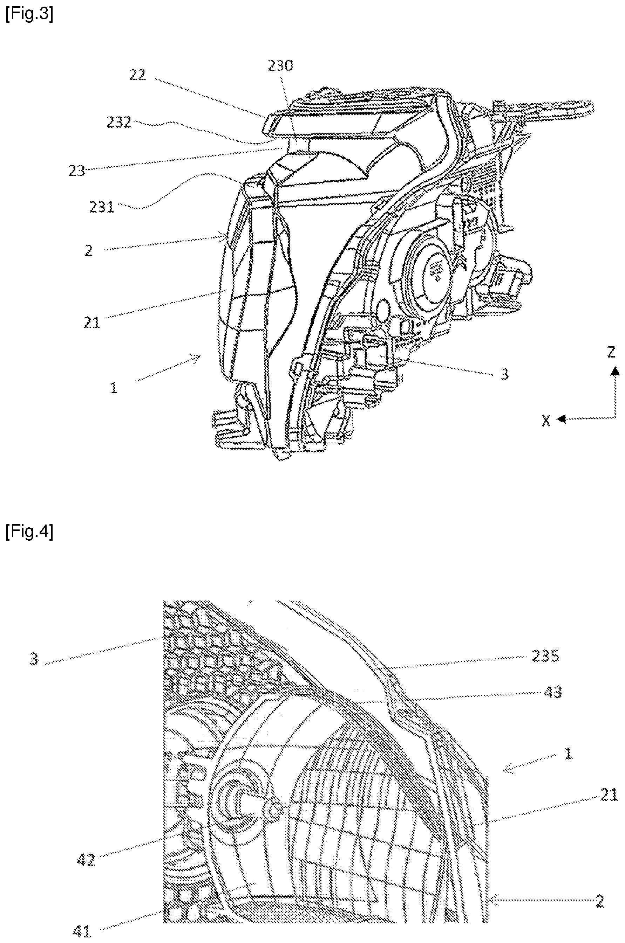

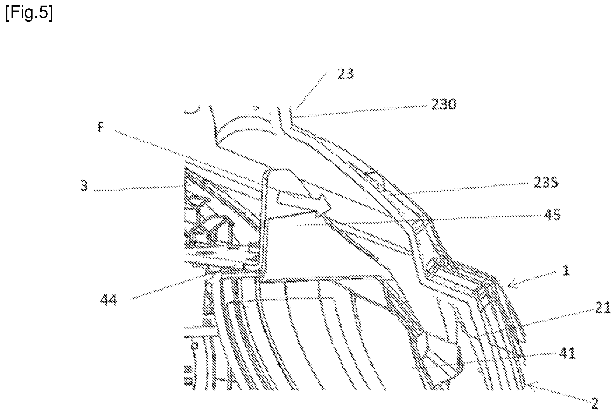

Comme illustré en figure 2, le projecteur 1 comporte un boîtier 3 sur lequel est fixée la vitre 2. La vitre 2 et le boîtier 3 délimite un volume intérieur de boîtier. Le projecteur 1 comporte deux modules d'éclairage 4 composés chacun au moins d'un réflecteur 41 et/ou d'une lentille optique, ainsi que d'une source d'éclairage 42, disposés dans le volume intérieur de boîtier, comme illustré en figure 4 et 5. La vitre 2 comporte une première zone 21 qui forme la première fenêtre 21, disposée en vis-à-vis d'un premier module d'éclairage, et une deuxième zone 22 qui forme la deuxième fenêtre 22 et qui est disposée en vis-à-vis d'un deuxième module 4 d'éclairage. La lumière émise respectivement par chacun des modules d'éclairage traverse respectivement chacune des fenêtres 21, 22 de sorte à être diffusée à l'extérieur du projecteur 1.

La vitre 2 comporte un renfoncement 23 s'étendant d'un bord à l'autre de ladite vitre 2, entre la première fenêtre 21 et la deuxième fenêtre 22. Ce renfoncement est formé par une paroi de fond 230 disposé dans le fond du renfoncement 23, une premier paroi latérale 231 et une deuxième paroi latérale 232 s'étendant respectivement depuis la paroi de fond 230 jusqu'à respectivement un bord de la première fenêtre 21 et un bord de la deuxième fenêtre 22. C'est-à-dire que la paroi de fond 230 est relié à la première fenêtre par la première paroi latérale 231 et à la deuxième fenêtre 22 par la deuxième paroi latérale 232.

La paroi de fond 230 comporte une zone bombée 235 vers l'extérieur du projecteur 2. C'est-à-dire qu'une partie de la paroi de fond 230 forme une zone convexe dirigée vers l'extérieur du projecteur 1, et donc forme à l'intérieur du projecteur 1 une zone concave en creux orientée vers l'extérieur du projecteur 1. La zone bombée 235 n'est pas une surépaisseur de la paroi de fond 230, c'est-à-dire que l'épaisseur de la vitre 2 au niveau de la zone bombée 235 est d'épaisseur sensiblement identique au reste de la vitre 2, notamment au niveau des fenêtres 21, 22 et de la paroi de fond 230. La zone bombée 235 s'étend depuis la paroi de fond 230 et sur la première paroi latérale 231. C'est-à-dire que la zone bombée 235 forme une zone en saillie depuis la paroi de fond 230, cette zone en saillie s'étendant sur la première paroi latérale 231 comme illustré en figure 2 et 3. Autrement dit, la première paroi latérale 231 s'étend depuis le bord de la première fenêtre 21 jusqu'à la zone bombée 235. Dans les figures 2 à 5, le sommet de la zone bombée 235, qui correspond à la partie de la zone bombée 235 la plus en saillie par rapport à la paroi de fond 230, est située à la jonction avec la première paroi latérale 231.

L'écartement entre la paroi de fond 230 et la première fenêtre 21 en dehors de la zone bombée 235 est plus grand que l'écartement entre le sommet de la zone bombée 235 et la première fenêtre 21.

La première fenêtre 21 est disposée plus bas que la deuxième fenêtre 22, c'est-à-dire en dessous, une fois installé sur le véhicule 100. Le renfoncement 23 est donc située au-dessus de la première fenêtre 21.

Comme illustré en figure 4 et 5, un bord du premier module d'éclairage 4 est disposé en vis-à-vis de la zone bombée 235 du renfoncement 23.

Dans la variante illustrée en figure 4, le premier module 4 comporte un réflecteur 41 concave à l'intérieur duquel est disposée la source de lumière 42. La source de lumière du premier module 4 est une ampoule 42 à incandescence, par exemple une ampoule halogène. Le réflecteur 41 comporte une ouverture délimitée par un bord extérieur 43 et par laquelle la lumière produite par l'ampoule 42 et réfléchie par le réflecteur 41 est diffusée. Le réflecteur 41 et l'ampoule 42 sont configurés de sorte à diriger la lumière de l'ampoule 42 vers la première fenêtre 21. C'est-à-dire que l'ouverture du réflecteur 41 est orientée vers la première fenêtre 21. Le module 4 est disposée de sorte qu'une partie du bord extérieur 43 du réflecteur 41 est en vis-à-vis de la zone bombée 235. Cette disposition permet d'augmenter localement, au niveau de ladite partie du bord extérieur 43, la distance entre le réflecteur 41 et la vitre 2, créant ainsi un passage large pour évacuer l'air chauffé par l'ampoule 42 dans le réflecteur 41, et éviter une surchauffe de la vitre 2. Le renfoncement 23 étant au-dessus de la première fenêtre 21, la zone bombée 235 se situe aussi au-dessus de la première fenêtre 21, et l'évacuation de l'air chaud se fait par convection naturelle. La zone bombée 235 permet en outre de donner aussi plus d'amplitude au mouvement du réflecteur lors du réglage de la direction de l'éclairage dudit module 4, notamment lors d'un réglage de site autour d'un axe parallèle à l'axe transversal Y.

Dans la variante illustrée en figure 5, la source de lumière du premier module 4 est une diode électroluminescente, connue sous le nom de LED, montée sur un support 44. Le premier module 4 comporte aussi un réflecteur 41, la diode électroluminescente et le réflecteur 41 étant configurés de sorte à réfléchir la lumière de la source de lumière 42 vers la première fenêtre 21. Le réflecteur 41 est disposé en vis-à-vis de la première fenêtre 21. Le support 44 est une plaque plane disposée sensiblement perpendiculairement à la première fenêtre 21 et alignée avec la direction d'extension du renfoncement 23, en vis-à-vis de la zone bombée 235. Dans le mode de réalisation de la figure 5, la plaque est sensiblement dans un plan parallèle aux axes X et Y, le renfoncement 23 s'étendant dans une direction parallèle à l'axe transversale Y, d'un côté à l'autre de la vitre 2. La support 44 est en vis-à-vis de la zone bombée 235. Une plaque complémentaire 45 s'étend perpendiculairement au support 44, depuis un bord dudit support 44 disposé du côté de la vitre 2, et à l'opposé du réflecteur 41. La plaque complémentaire 45 s'étend donc en vis-à-vis de la zone bombée 235. Le module 4 peut ainsi se déplacer, notamment pivoter autour de l'axe transversal Y au véhicule, sur une grande amplitude, sans venir toucher la vitre 2. La flèche F de la figure 5 illustre un sens de déplacement du module 4 sans la zone bombée 235.

La figure 1 illustre un exemple d'application sur un véhicule 100 du projecteur 1, dans lequel le projecteur est disposé derrière le parechoc 101, les fenêtres 21 et 22 étant disposées en vis-à-vis d'ouverture du pare-chocs, et un élément 102 du pare-chocs 101 recouvrant le renfoncement 23 avec la zone bombée 235, la rendant ainsi invisible. D'autres positions du projecteur 1 sur le véhicule sont possibles, par exemple derrière un élément de carrosserie autre qu'un pare-chocs, ou disposé à l'arrière du véhicule.

## Revendications

1. Projecteur avant d'automobile comprenant un boîtier (3) sur lequel est fixée une vitre (2) transparente délimitant avec ledit boîtier (3) un volume intérieur de boîtier, deux modules d'éclairage (4) composés chacun au moins d'un réflecteur (41) et/ou d'une lentille optique, ainsi que d'une source d'éclairage (42), disposés dans le volume intérieur de boîtier, la vitre (2) comportant une première zone (21) dite première fenêtre (21) disposée en vis-à-vis d'un premier module (4) d'éclairage et une deuxième zone (22) dite deuxième fenêtre (22) disposée en vis-à-vis d'un deuxième module d'éclairage, la vitre (2) comportant un renfoncement (23) s'étendant d'un bord à l'autre de ladite vitre (2), entre la première fenêtre (21) et la deuxième fenêtre (22), ledit renfoncement comportant une paroi de fond (230) disposé dans le fond du renfoncement (23), une premier paroi latérale (231) et une deuxième paroi latérale (232) s'étendant respectivement depuis la paroi de fond (230) jusqu'à respectivement un bord de la première fenêtre (21) et un bord de la deuxième fenêtre (22), la paroi de fond (230) comportant une zone bombée (235) vers l'extérieur du projecteur (2), la partie bombée (235) permettant une circulation de l'air provenant du premier module d'éclairage (4), le premier module comportant une diode électroluminescente formant la source de lumière (42), étant montée sur un support (44), et un réflecteur (41), la diode électroluminescente et le réflecteur (41) étant configurés de sorte à réfléchir la lumière de la source de lumière (42) vers la première fenêtre (21), le renfoncement (23) s'étendant suivant une direction d'extension, le support (44) étant une plaque plane disposée sensiblement perpendiculairement à la première fenêtre (21) et étant alignée avec la direction d'extension du renfoncement (23), en vis-à-vis de la zone bombée (235), **caractérisé en ce que** le premier module (4) comporte une plaque complémentaire (45) perpendiculaire au support (44), s'étendant depuis le bord dudit support (44) disposé du côté de la vitre (2), la plaque complémentaire (45) s'étendant à l'opposé du réflecteur (41) en vis-à-vis de la zone bombée (235), et **en ce que** la plaque complémentaire (45) est une extension du support (44) permettant d'augmenter la capacité dudit support (44) à évacuer la chaleur produite par la diode électroluminescente (42).

2. Projecteur (1) suivant la revendication précédente, dont la zone bombée (235) s'étend sur la première paroi latérale (231).

3. Projecteur (1) suivant la revendication précédente, dont une partie du premier module d'éclairage (4) est disposé en vis-à-vis de la zone bombée (235).

4. Projecteur suivant l'une des revendications précédentes, dont le premier module (4) comporte un réflecteur (41) concave à l'intérieur duquel est disposé la source de lumière (42), ladite source de lumière étant une ampoule (42) à incandescence, de préférence une ampoule halogène, le réflecteur (41) comportant une ouverture délimitée par un bord extérieur (43) et par laquelle la lumière produite par l'ampoule (42) et réfléchie par le réflecteur (41) est diffusée, le réflecteur (41) et l'ampoule (42) étant configurés de sorte à diriger la lumière de la source de lumière (42) vers la première fenêtre (21).

5. Projecteur (1) suivant la revendication précédente, dont une partie du bord extérieur (43) du réflecteur (41) est en vis-à-vis de la zone bombée (235).

6. Véhicule (100) comportant un projecteur (1) suivant l'une des revendications précédentes disposé à l'avant ou à l'arrière dudit véhicule (100).

7. Véhicule (100) suivant la revendication précédente, comportant un parechoc et dont la première fenêtre (21) est disposée en dessous de la deuxième fenêtre (22) en se plaçant dans le référentiel du véhicule (1), la première fenêtre (21) étant en vis-à-vis d'une ouverture du parechoc (101) de forme complémentaire à celle de la fenêtre de sorte à permettre à la lumière produite par le premier module d'éclairage d'être diffusée devant le véhicule (100), le parechoc(101) comportant une partie de recouvrement (102) s'étendant par-dessus le renfoncement (23), entre les deux fenêtres (21, 22). 1

## Patentansprüche

1. Kraftfahrzeugvorderscheinwerfer mit einem Gehäuse (3), an dem eine transparente Scheibe (2) befestigt ist, die mit dem Gehäuse (3) ein Gehäuseinnennvolumen begrenzt, zwei Beleuchtungsmodulen (4), die jeweils aus mindestens einem Reflektor (41) und/oder einer optischen Linse bestehen, sowie einer Beleuchtungsquelle (42), die in dem Gehäuseinnennvolumen angeordnet sind, wobei die Scheibe (2) einen ersten Bereich (21), das erste Fenster (21), das einem ersten Beleuchtungsmodul (4) gegenüberliegt, und einen zweiten Bereich aufweist (22) das zweite Fenster (22), das gegenüber einem zweiten Beleuchtungsmodul angeordnet ist, wobei die Glasscheibe (2) eine Vertiefung (23) aufweist, die sich von einem Rand der Glasscheibe (2) zum anderen zwischen dem ersten Fenster (21) und dem zweiten Fenster (22) erstreckt, wobei die Vertiefung eine Bodenwand (230) aufweist, die im Boden der Vertiefung (23) angeordnet ist, eine erste Seitenwand (231) und eine zweite Seitenwand (232), die sich jeweils von der Bodenwand (23) aus erstreckt Bis zu einem Rand des ersten Fensters (21) bzw. einem Rand des zweiten Fensters (22), wobei die Bodenwand (230) einen gewölbten Bereich (235) zur Außenseite des Scheinwerfers (2) hin aufweist,
wobei der gewölbte Bereich (235) einen Luftstrom aus dem ersten Beleuchtungsmodul (4) ermöglicht, wobei das erste Modul eine die Lichtquelle (42) bildende Leuchtdiode, die auf einem Träger (44) angebracht ist, und einen Reflektor (41), die Leuchtdiode und den Reflektor aufweist (41) so gestaltet sind, dass sie Licht von der Lichtquelle (42) zum ersten Fenster (21) reflektieren, wobei sich die Vertiefung (23) in einer Erstreckungsrichtung erstreckt, wobei der Träger (44) eine ebene Platte ist, die im Wesentlichen senkrecht zum ersten Fenster (21) angeordnet ist und mit der Erstreckungsrichtung der Vertiefung (23) gegenüber dem gewölbten Bereich (235) ausgerichtet ist,
**dadurch gekennzeichnet, dass** das erste Modul (4) eine komplementäre Platte (45) senkrecht zu dem Träger (44), S, aufweist Ausgehend von dem Rand des Trägers (44), der auf der Seite der Scheibe (2) angeordnet ist, erstreckt sich die Gegenplatte (45) gegenüber dem Reflektor (41) gegenüber dem gewölbten Bereich (235), und dass die Gegenplatte (45) eine Verlängerung des Trägers (44) ist, die es ermöglicht, die Fähigkeit des Trägers (44) zu erhöhen, die von der Leuchtdiode (42) erzeugte Wärme abzuführen.

2. Projektor (1) nach dem vorhergehenden Anspruch, dessen gewölbter Bereich (235) sich über die erste Seitenwand (231) erstreckt.

3. Scheinwerfer (1) nach dem vorhergehenden Anspruch, bei dem ein Teil des ersten Beleuchtungsmoduls (4) gegenüber dem gewölbten Bereich (235) angeordnet ist.

4. Projektor nach einem der vorhergehenden Ansprüche, bei dem das erste Modul (4) einen konkaven Reflektor (41) aufweist, in dem die Lichtquelle (42) angeordnet ist, wobei die Lichtquelle eine Glühbirne (42), vorzugsweise eine Halogenbirne, ist, der Reflektor (41) eine Öffnung aufweist, die durch einen äußeren Rand (43) begrenzt ist, und durch die das von der Birne (42) erzeugte und vom Reflektor (41) reflektierte Licht gestreut wird, der Reflektor (41) und Die Glühbirne (42) ist so ausgebildet, dass sie Licht von der Lichtquelle (42) zum ersten Fenster (21) leitet.

5. Projektor (1) nach dem vorhergehenden Anspruch, bei dem ein Teil des äußeren Randes (43) des Reflektors (41) dem gewölbten Bereich (235) gegenüberliegt.

6. Fahrzeug (100) mit einem Scheinwerfer (1) nach einem der vorhergehenden Ansprüche, der vor oder hinter dem Fahrzeug (100) angeordnet ist.

7. Fahrzeug (100) nach dem vorhergehenden Anspruch, das einen Blitzableiter aufweist und dessen erstes Fenster (21) unterhalb des zweiten Fensters (22) angeordnet ist, wobei es sich in dem Bezugsrahmen des Fahrzeugs (1) befindet, wobei das erste Fenster (21) einer Öffnung des Blitzableiters (101) gegenüberliegt, die komplementär zu der des Fensters ist, sodass das vom ersten Beleuchtungsmodul erzeugte Licht vor das Fahrzeug (100) gestreut werden kann, wobei der Blitzableiter (101) einen Überlappungsabschnitt aufweist (102), die sich über die Vertiefung (23) zwischen den beiden Fenstern (21, 22) erstreckt.

## Claims

1. Motor vehicle front headlight comprising a housing (3) to which is fixed a transparent window (2) defining with said housing (3) an inner housing volume, two lighting units (4) each compound with at least one reflector (41) and/or an optical lens, as well as a lighting source (42), arranged in the inner housing volume, the window (2) comprising a first zone (21) called first window (21) arranged opposite a first lighting unit (4) and a second zone (22) called second window (22) arranged opposite a second lighting unit, the window (2) comprising a recess (23) extending from one side to the other of said window (21), between the first window (21), and the second window (22), said recess comprising a bottom wall (230) arranged in the bottom of the recess (23), a first side wall (231) and a second side wall (232) extending respectively from the bottom wall (230) as far as respectively an edge of the first window (21) and an edge of the second window (22), the bottom wall (230) comprising a curved zone (235) towards the outside of the headlight (2), the curved part (235) allowing circulation of the air coming from the first lighting module (4), the first module comprising a light-emitting diode forming the light source (42), being mounted on a support (44), and a reflector (41), light-emitting plate and reflector (41) being configured so as to reflect light from light source (42) towards first window (21), recess (23) extending along an extension management, support (44) being a flat plate arranged substantially perpendicularly to first window (21) and being aligned with the extension management of recess (23), facing curved zone (235), wherein first module (4) comprises a complementary plate (45) perpendicular to support (44), extending from the edge of said support (44) arranged on the side of glass (2), complementary plate (45) extending opposite reflector (41) facing curved zone (2) (235), and in that the complementary plate (45) is an extension of the support (44) making it possible to increase the capacity of said support (44) to evacuate the heat produced by the light-emitting diode (42).

2. Headlight (1) according to the previous claim, the curved zone (235) of which extends over the first side wall (231).

3. Headlight (1) according to the previous claim, a part of the first lighting unit (4) of which is arranged opposite the curved zone (235).

4. Projector according to one of the previous claims, the first module (4) of which comprises a concave reflector (41) inside which the light source (42) is arranged, said light source being an incandescent bulb (42), preferably a halogen bulb, the reflector (41) comprising an opening defined by an outer edge (43) and by which the light produced by the bulb (42) and reflected by the reflector (41) is diffused, the reflector (41) and the bulb (42) being configured so as to direct the light from the light source (42) towards the first window (21).

5. Headlight (1) according to the previous claim, in which part of the outer edge (43) of the reflector (41) is opposite the curved zone (235).

6. Vehicle (100) comprising a headlamp (1) according to one of the previous claims arranged in front of or in the rear of said vehicle (100).

7. Vehicle (100) according to the previous claim, comprising a bumper and the first window (21) of which is arranged below the second window (22) by being placed in the frame of reference of the vehicle (1), the first window (21) being opposite an opening of the bumper (101) of a shape complementary to that of the window so as to allow the light produced by the first lighting module to be diffused in front of the vehicle (100), the bumper (101) comprising a covering part (102) extending above the recess (23), between the two windows (21, 22).
